# EUROPEAN PATENT SPECIFICATION

(11) **EP 3 059 903 B1**
(45) Date of publication and mention of the grant of the patent: **21.08.2019**
(21) Application number: 14853649.3
(22) Date of filing: 27.08.2014
(51) Int. Cl.: H04W 28/16

(54) **SYSTEM AND METHOD FOR CONTROLLING NETWORK**
SYSTEM UND VERFAHREN ZUR NETZWERKSTEUERUNG
SYSTÈME ET PROCÉDÉ DE COMMANDE DE RÉSEAU

(30) Priority: 18.10.2013 JP 2013217681
(43) Date of publication of application: 24.08.2016
(73) Proprietor: NEC Corporation, Tokyo 108-8001 (JP)
(72) Inventor: NAKATA, Atsushi, Tokyo 108-8001 (JP); MATSUNAGA, Yasuhiko, Tokyo 108-8001 (JP)
(74) Representative: MacDougall, Alan John Shaw
(86) International application number: PCT/JP2014/004404
(87) International publication number: WO 2015/056392

(56) References cited:
- WO-A1-2012/035697
- WO-A1-2013/041128
- WO-A1-2013/069170
- WO-A1-2013/123224
- GB-A- 2 490 968
- US-A1- 2013 070 742
- 3GPP TS123.251 11.5.0(2013-03 pages 8 - 20, XP014156380

## Description

### Technical Field

This application relates to control of a mobile communication network.

### Background Art

Examples of a mobile communication network include a Universal Mobile Telecommunications System (UMTS) and an Evolved Packet System (EPS). Each mobile communication network includes a radio access network (RAN) and a core network (CN). Examples of a RAN include a UMTS Terrestrial Radio Access Network (UTRAN) and an Evolved UTRAN (EUTRAN). Examples of a Core Network include a UMTS Core Network and an Evolved Packet Core (EPC). Each RAN includes a base station (e.g., NodeB and Evolved NodeB) that is connected to a mobile station by means of a radio access technology. Each core network is accessed from a mobile station through a RAN and provides the mobile station with a connection service (e.g., Internet Protocol (IP) connection service) for connecting to an external network.

Further, in this specification, a mobile communication network includes a mobile backhaul (MBH). Each mobile backhaul is a network that connects between a site (cell site) where a base station (e.g., NodeB and Evolved NodeB) is placed and a site where a higher network node (e.g., Radio Network Controller (RNC), SGSN Serving GPRS Support Node (SGSN), Serving Gateway (SGW), Mobility Management Entity (MME)) is placed. Each mobile backhaul includes a physical layer (layer 1) network and a packet transport network for transferring IP packets on the physical layer network, and provides an IP packet transfer service between a base station and a higher network node. The physical layer network is composed of optical fibers (e.g., Passive Optical Network (PON), Synchronous Optical Network (SONET)/Synchronous Digital Hierarchy (SDH), Wavelength Division Multiplexing (WDM)), copper wires (e.g., E1/T1 network, Digital Subscriber Line (DSL)), radio links (e.g., microwave point-to-point link), or any combination thereof. Each packet transport network uses, for example, Virtual Local Area Network (VLAN) technologies, Multi-Protocol Label Switching (MPLS) technologies, or a combination thereof.

Network sharing is used to share the costs required to build a mobile communication network among a plurality of Mobile Network Operators (MNO). There are various ways for the network sharing. For example, Non Patent Literature 1 discloses two configurations for sharing a RAN among a plurality of MNOs, which are a Gateway Core Network (GWCN) and a Multi-Operator Core Network (MOCN). In the GWCN, a RAN is shared by a plurality of MNOs, and one or more CN nodes (e.g., SGSN or MME) are also shared by the plurality of MNOs. On the other hand, in the MOCN, a RAN is shared by a plurality of MNOs, but a core network is not shared. Specifically, in the MOCN, CN nodes (e.g., SGSN or MME) of each MNO are connected to the same RAN node (e.g., RNC or eNodeB).

Further, a virtualized core network is known as architecture for allowing a plurality of MNOs to share one core network (e.g., see Patent Literatures 1 and 2). The virtualized core network uses server virtualization technologies and network virtualization technologies, and abstracts a core network control plane, or date plane, or both. Specifically, in the virtualized core network, CN nodes (e.g., MME, S/PGW control plane, and S/PGW data plane) of each MNO are implemented as virtual machines that is configured in a server pool or a virtual router that is configured in physical switches.

When a plurality of MNOs shares a RAN or shares both a RAN and a core network, a mobile backhaul is also shared by the plurality of MNOs. Accordingly, the mobile backhaul transfers the traffic of the plurality of MNOs.

### Citation List

### Patent Literature

Patent Literature 1: United States Patent Publication No. 2012/0300615
Patent Literature 2: United States Patent Publication No. 2013/0183991

### Non Patent Literature

Non-Patent Literature 1: 3GPP TS 23.251 V11.5.0 (2013-03), "3rd Generation Partnership Project; Technical Specification Group Services and System Aspects; Network Sharing; Architecture and functional description (Release 11)", March 2013

GB 2490968 discloses a wireless communication system comprising one or more base stations able to divide resources between multiple network operators sharing the base station. A shared base station is configured to monitor a contribution to the load on the base station associated with network operators sharing the base station resources, and to provide the determined contribution to the load to one or more other base stations for use in load balancing between the base stations.

### Summary of Invention

### Technical Problem

When a plurality of MNOs shares a RAN, a mobile backhaul, and a core network, network resource allocation needs to be configured on each of the RAN, the mobile backhaul, and the core network in accordance with an agreement or a contract that defines the slicing of network resources among the plurality of MNOs. However, network resources to be allocated to the plurality of MNOs are different among the RAN, the mobile backhaul, and the core network. To be specific, the network resources of the RAN are radio resources that include at least one of a time and frequencies and transmission power. The network resources of the RAN may include, in place of or in combination with radio resources, at least one of: the number of user equipments (UEs) that have established wireless connections; cell load that is calculated on the basis of a UE type and an established bearer type; transport resources; and hardware resources in the RAN such as Central Processing Units (CPUs) and memories. The network resources of the mobile backhaul, for example, include a guaranteed bandwidth for a VLAN or a MPLS label path obtained by traffic shaping and traffic scheduling, and also include queue priority and weight configurations for a Weighted Round Robin (WRR) or Weighted Fair Queuing (WFQ) on the basis of a traffic type (e.g., VLAN ID, UE type, established bearer type, DiffServ Code Point (DSCP)). Further, the network resources of the core network, for example, include a CPU utilization rate, a memory utilization rate, guaranteed bandwidths for inbound traffic and outband traffic in a data-plane CN node (e.g., SGW, PGW, SGSN data plane, Gateway GPRS Support Node (GGSN)), and also include processing times of a control-plane CN node. Further, in the case of the virtualized core network, the network resources of the core network include computing resources or bandwidths (switching capacity) allocated to a virtualized CN node. Therefore, an operator needs to perform setting on each of the RAN, the mobile backhaul and the core network in accordance with an agreement or contract that defines the slicing of network resources among the plurality of MNOs, which raises a problem that a burden of the configuration operation is large.

The present invention provides a network control system, a control method, and a non-transitory computer readable medium storing a program for causing a computer to perform the control method, as set out in the appended claims.

### Solution to Problem

In an embodiment, a network control system comprises a control module configured to enforce a network resource configuration to each of at least two of a radio access network, a mobile backhaul network, and a core network in accordance with common resource partitioning information indicating slicing of network resources among a plurality of mobile network operators, in order to allow the plurality of mobile network operators to share the at least two networks, wherein the network control system is characterized in that the control module_is configured to generate, in accordance with the common resource partitioning information, a first configuration causing at least one hardware element in the core network to function as a virtualized core network node of each of the plurality of mobile network operators, and apply the first configuration to the at least one hardware element.

In an embodiment, a control method comprises enforcing a network resource configuration to each of at least two of a radio access network, a mobile backhaul network, and a core network in accordance with common resource partitioning information indicating slicing of network resources among a plurality of mobile network operators, in order to allow the plurality of mobile network operators to share the at least two networks, wherein the control method is characterized in that the enforcing includes generating, in accordance with the common resource partitioning information, a first configuration causing at least one hardware element in the core network to function as a virtualized core network node of each of the plurality of mobile network operators, and applying the first configuration to the at least one hardware element.

In an embodiment, a non-transitory computer readable medium stores a program for causing a computer to perform the above-described control method.

Also disclosed is a network control apparatus that includes a mediation module. The mediation module is configured to convert common resource partitioning information, indicating slicing of network resources among a plurality of MNOs, into configuration information of network resources to be applied to each of at least two of a RAN, a mobile backhaul, and a core network, in order to allow the plurality of MNOs to share the at least two networks.

### Advantageous Effects of Invention

According to the invention as described in the appended claims, it is possible to provide a network control system, a control method, and a non-transitory computer readable medium storing a program for causing a computer to perform the control method, that can contribute, when at least two of a RAN, a mobile backhaul, and a core network are shared among a plurality of MNOs, to improving the efficiency of performing setting of network resource allocation on the at least two networks to be shared.

### Brief Description of Drawings

Fig. 1 is a diagram showing one example of network sharing (i.e., MOCN);
Fig. 2 is a diagram showing one example of network sharing (i.e., GWCN);
Fig. 3 is a diagram showing one example of network sharing (i.e., virtualized core network);
Fig. 4 is a diagram showing a configuration example of a network control system according to first to third embodiments;
Fig. 5 is a flowchart showing one example of network control based on resource partitioning information indicating the slicing of network resources among a plurality of MNOs according to the first embodiment;
Fig. 6 is a flowchart showing one example of network control based on resource partitioning information indicating the slicing of network resources among a plurality of MNOs according to the second embodiment; and
Fig. 7 is a flowchart showing one example of network control according to the third embodiment.

### Description of Embodiments

Specific embodiments will hereinafter be described in detail with reference to the drawings. The same or corresponding elements are denoted by the same reference symbols throughout the drawings and repeated descriptions thereof are omitted as appropriate to clarify the explanation.

Embodiments below are described mainly with respect to an Evolved Packet System (EPS). However, those embodiments is not limited to EPS and may be applied to other mobile communication networks or systems, such as an UMTS and a global system for mobile communications (GSM) / General packet radio service (GPRS) system.

### First embodiment

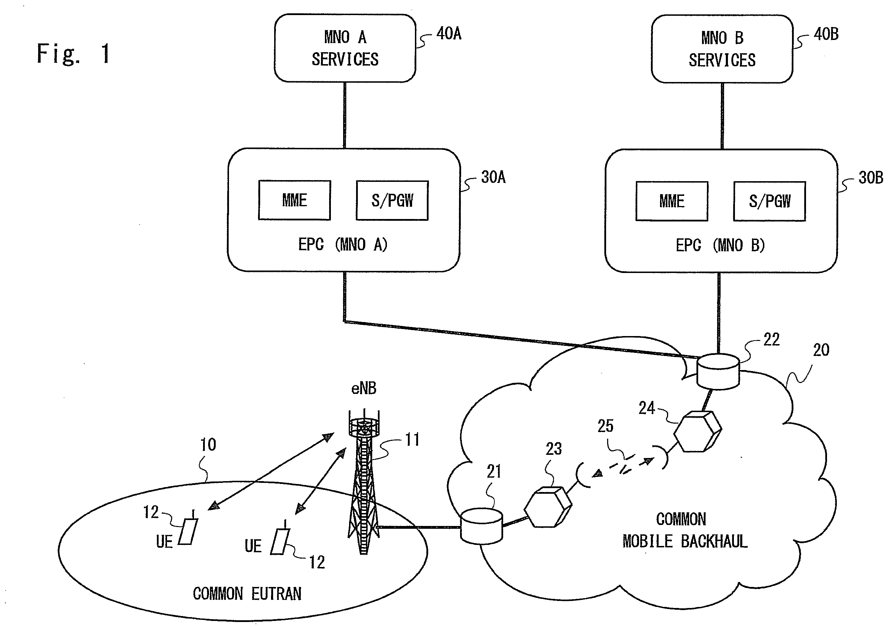

First, several examples of network sharing to which a plurality of embodiments including this embodiment is directed are described. Fig. 1 shows an example of the MOCN. Specifically, in the example shown in Fig. 1, an EUTRAN 10 and a mobile backhaul 20 are shared by two MNOs (i.e., MNO A and MNO B). On the other hand, core networks (EPC 30A and EPC 30B) of MNO A and MNO B are not shared.

The EUTRAN 10 includes an eNB 11. The eNB 11 communicates with UEs 12. The UEs 12 include a UE(s) that has subscribed to the MNO A and a UE(s) that has subscribed to the MNO B. The UE(s) that has subscribed to the MNO A receives a service 40A from the MNO A through the common EUTRAN 10, the common mobile backhaul 20, and the EPC 30A of the MNO A. On the other hand, the UE(s) that has subscribed to the MNO B receives a service 40B from the MNO B through the common EUTRAN 10, the common mobile backhaul 20, and the EPC 30B of the MNO B.

The mobile backhaul 20 connects the eNB 11 to the EPC 30A of the MNO A and the EPC 30B of the MNO B. In the example shown in Fig. 1, the mobile backhaul 20 includes packet communication devices 21 and 22 and radio transmission devices 23 and 24. The radio transmission devices 23 and 24 are configured to establish a point-to-point radio link 25 using, for example, microwaves or millimeter waves, and communicate with each other through the point-to-point radio link 25. The radio transmission devices 23 and 24 communicate with the packet communication devices 21 and 22 through, for example, a LAN interface. The packet communication devices 21 and 22 relay data packets (e.g., layer-2 protocol data units (PDUs) or layer-3 PDUs) between the eNB 11 and a higher network node (i.e. MMEs and SGWs in the EPC 30A and the EPC 30B). Each of the packet communication devices 21 and 22 may be a layer-2 switch or a layer-3 switch. Alternatively, each of the packet communication devices 21 and 22 may be a MPLS label switch router (LSR). Note that, the configuration of the mobile backhaul 20 shown in Fig. 1 is merely an example. The mobile backhaul 20 may include an optical communication network such as PON, SONERT/SDH or WDM, or may include a copper wire network such as DSL or E1/T1.

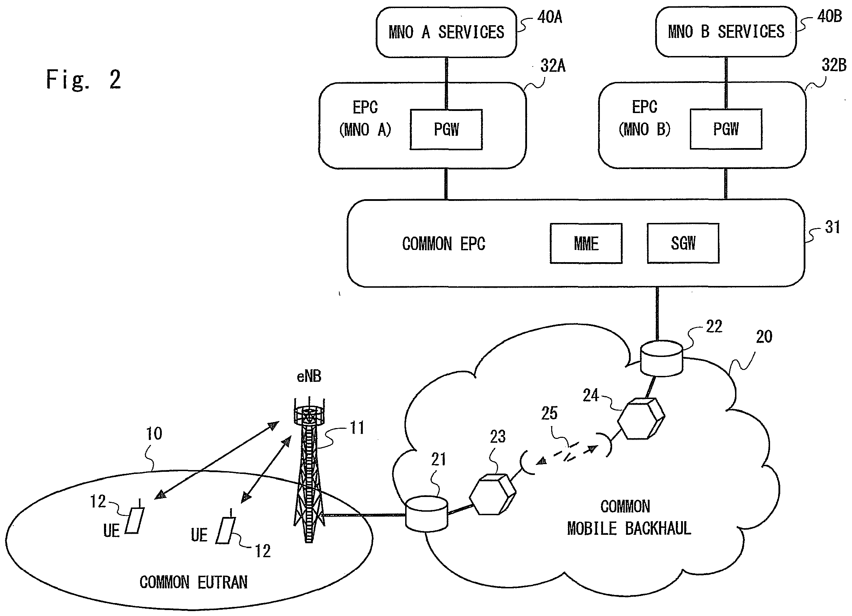

Fig. 2 shows an example of the GWCN. In the example shown in Fig. 2, the EUTRAN 10 and the mobile backhaul 20 are shared by the MNO A and MNO B, just like the case of the MOCN in Fig. 1. Further, in the example shown in Fig. 2, a part of the core network (common EPC 31 shown in Fig. 2) is also shared by the MNO A and MNO B. The common EPC 31 includes an MME and an SGW. The common EPC 31 is connected to an individual EPC 32A of the MNO A and an individual EPC 32B of MNO B. Each of the EPC 32A and the EPC 32B includes a PGW.

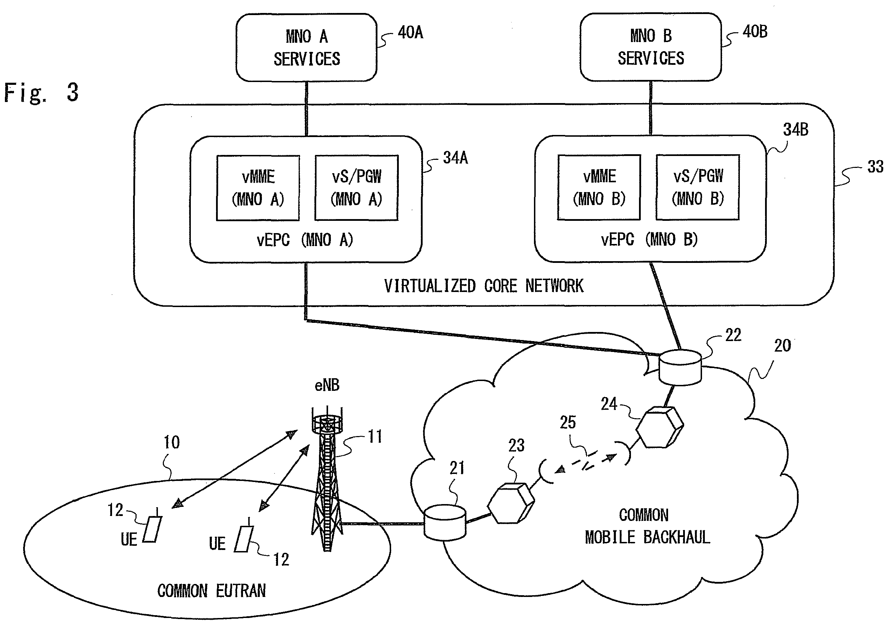

Fig. 3 shows an example of a virtualized core network. In the example shown in Fig. 3, a virtualized core network 33 includes hardware elements including a server pool and physical switches (not illustrated), and software elements that control those hardware elements to construct virtual machines and virtual routers. Such software elements are generally called a hypervisor or a Virtual Machine Monitor (VMM)). Each of a virtual EPC 34A of the MNO A and a virtual EPC 34B of the MNO B includes logical CN nodes (e.g., virtual MME, virtual SGW, virtual PGW) each configured as a virtual machine or a virtual router.

Although Figs. 1 to 3 show network sharing between two MNOs, the EUTRAN, the mobile backhaul, and the EPC may be shared among three or more MNOs. Further, there are other examples of network sharing different from those shown in Figs. 1 to 3. For example, network virtualization technologies that are applied to the core network in the example shown in Fig. 3 may also be applied to the common EUTRAN 10 and the common mobile backhaul 20. A network control system and a network control method according to this embodiment described below may be applied to various network sharing configurations including those shown in Figs. 1 to 3.

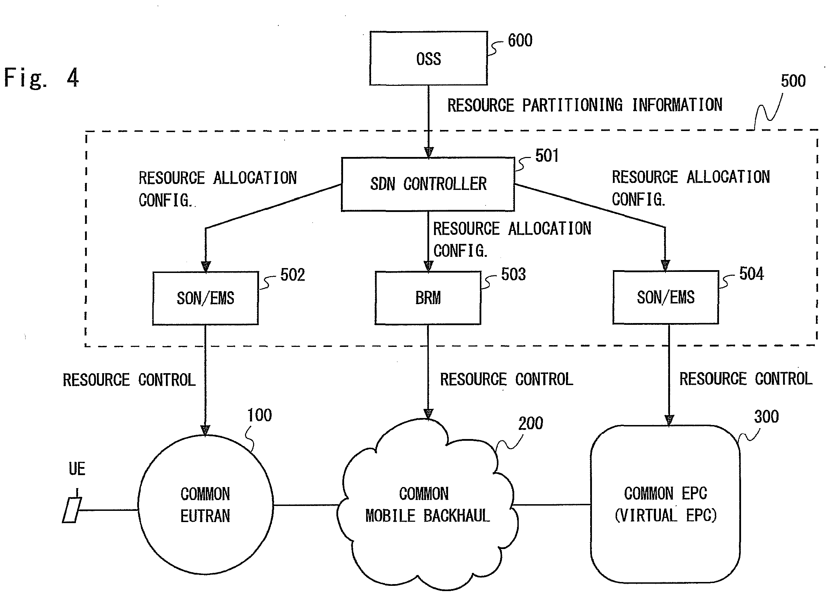

Fig. 4 shows a configuration example of a network control system 500 according to this embodiment. The network control system 500 receives resource partitioning information indicating the allocation of network resources among a plurality of MNOs. The resource partitioning information is supplied from an Operations Support System (OSS) 600 to the network control system 500. The resource partitioning information indicates common resource partitioning for the whole of the mobile communication network including the EUTRAN 100, the mobile backhaul 200, and the EPC 300. Stated differently, the resource partitioning indicated by the resource partitioning information is applied in common to the common EUTRAN 100, the common mobile backhaul 200, and the common EPC. The resource partitioning information indicates, for example, an amount or a proportion of network resources to be partitioned to each of the plurality of MNOs. There are various specific ways of indicating the network resources to be partitioned in the resource partitioning information. In some implementations, the resource partitioning information may clearly indicate an amount or a proportion of network resources to be partitioned to each of the plurality of MNOs. Alternatively, the resource partitioning information may clearly indicate an amount of network resources to be partitioned to a certain MNO and indicate a proportion of network resources for another MNO to the remaining network resources.

In other implementations, the resource partitioning information may indicate an amount or a proportion of resources to be fixedly allocated (guaranteed) to each MNO. In this specification, such a resource partitioning mode is referred to as "full reservation mode". In the case of the full reservation mode, the resource partitioning information indicates, for example, a proportion of resources fixedly allocated to each MNO, such as "40% to MNO A, 30% to MNO B and 30% to MNO C".

In other implementations, the resource partitioning information may indicate an amount or a proportion of network resources to be fixedly partitioned (guaranteed) to each MNO and an amount or a proportion of network resources to be shared among a plurality of MNOs. In this specification, such a resource partitioning mode is referred to as "partial reservation mode". In the case of the partial reservation mode, the resource partitioning information indicates, for example, a proportion of resources fixedly allocated to each MNO and a proportion of shared resources, such as "20% to MNO A, 20% to MNO B, 20% to MNO C, and 40% to common resources". Note that, it is not necessary to clearly indicate the proportion of the shared resources in the resource partitioning information.

In yet other implementations, the resource partitioning information may indicate that all network resources are shared among a plurality of MNOs without specifying fixed guaranteed resources (guaranteed bandwidth) to each MNO. In this specification, such a resource partitioning mode is referred to as "full sharing mode".

Referring back to Fig. 4, in order to allow a plurality of MNOs to share the common mobile backhaul 200 and the common EPC (or virtual EPC) 300, the network control system 500 enforces a network resource configuration to each of the EUTRAN 100, the mobile backhaul 200, and the EPC 300 in accordance with the resource partitioning information. In the example shown in Fig. 4, the network control system 500 includes a Software-Defined Network (SDN) controller 501, a Self-Organizing Network (SON) / Element Management System (EMS) 502, a Backhaul Resource Manager (BRM) 503, and a SON/EMS 504. The SDN controller 501 functions as a mediation module to convert the resource partitioning information into the resource allocation configurations that are suitable for allocating respective resources of the EUTRAN 100, the mobile backhaul 200, and the EPC 300. The SON/EMS 502, the BRM 503 and the SON/EMS 504 function as enforcement modules that enforce configurations to a node(s) (e.g., eNB) in the EUTRAN 100, a node(s) (e.g., packet communication device, radio transmission device) in the mobile backhaul 200, and a node(s) (e.g., MME, S/PGW) in the EPC 300, respectively, in accordance with the respective resource allocation configurations generated by the SDN controller 501.

To be more specific, the SDN controller 501 may convert the common resource partitioning information into the resource allocation configuration (RAN configuration information) for the EUTRAN 100, the resource allocation configuration (backhaul configuration information) for the mobile backhaul 200, and the resource allocation configuration (EPC configuration information) for the EPC 300. As described earlier, network resources to be allocated to the plurality of MNOs are different among the EUTRAN 100, the mobile backhaul 200 and the EPC 300. Thus, the RAN configuration information, the backhaul configuration information, and the EPC configuration information indicate an configuration of allocating to the MNOs of network resources of the EUTRAN 100, that of the mobile backhaul 200, and that of the EPC 300, respectively.

The RAN configuration information indicates, for example, allocation of radio resources (frequencies, time, or resource blocks) of the EUTRAN 100 to the plurality of MNOs. The RAN configuration information is applied by the SON/EMS502 to an eNB in the EUTRAN 100 and affects scheduling of at least one of downlink transmission and uplink transmission in the eNB. The RAN configuration information may indicate allocation of other network resources of the EUTRAN 100 to the plurality of MNOs. Other network resources of the EUTRAN 100 may include at least one of: the number of connected UEs, cell load calculated on the basis of a UE type and an established bearer type; transport resources; and hardware resources in the RAN such as CPUs and memories.

The backhaul configuration information indicates, for example, allocation of a network bandwidth of the mobile backhaul 200 to the plurality of MNOs. For example, the backhaul configuration information is applied by the BRM503 to a node (e.g., packet communication device, radio transmission device) in the mobile backhaul 200. The backhaul configuration information affects at least one of: (a) a Virtual Private Network (VPN) configuration; (b) a VLAN configuration; (c) a MPLS configuration; (d) a traffic shaping configuration for a VLAN or a MPLS path; and (d) a traffic scheduling configuration for a VLAN or a MPLS path, in the node in the mobile backhaul 200. The backhaul configuration information may indicate allocation of other network resources of the mobile backhaul 200 to the plurality of MNOs. Other network resources of the mobile backhaul 200 may include queue priority and weight configurations for a WRR or WFQ on the basis of a traffic type (e.g., VLAN ID, UE type, established bearer type, DiffServ Code Point (DSCP)).

In the case of the GWCN architecture shown in Fig. 2, the EPC configuration information may indicate allocation of network resources of the EPC (common EPC) 300 to the plurality of MNOs. The EPC configuration information is applied by the SON/EMS 504 to a CN node (e.g., SGW) in the EPC 300 and affects at least one of a traffic shaping configuration and a traffic scheduling configuration in the data plane. The EPC configuration information may indicate allocation of other network resources of the EPC 300 to the plurality of MNOs. Other network resources of the EPC 300 may include a CPU utilization rate, a memory utilization rate, and guaranteed bandwidths for inbound traffic and outband traffic in a CN node.

On the other hand, in the case of the virtualized core network architecture shown in Fig. 3, the EPC configuration information may indicate allocation of computing resources or switching capacity for causing a hardware element (e.g., server pool, physical switches) in the EPC (virtual EPC) 300 to function as a virtual CN node of each MNO. The EPC configuration information is used, by a hypervisor that directly controls the hardware element (e.g., server pool, physical switches, not illustrated), for setting up the hardware element.

Note that, the function of each of the SDN controller 501, the SON/EMS 502, the BRM 503, and the SON/EMS 504 shown in Fig. 4 is implemented in one or more computers. Thus, at least one of the SON/EMS 502, the BRM 503, and the SON/EMS 504 may be implemented in a computer that is common to the SDN controller 501. In other words, at least one of the SON/EMS 502, the BRM 503, and the SON/EMS 504 may be omitted.

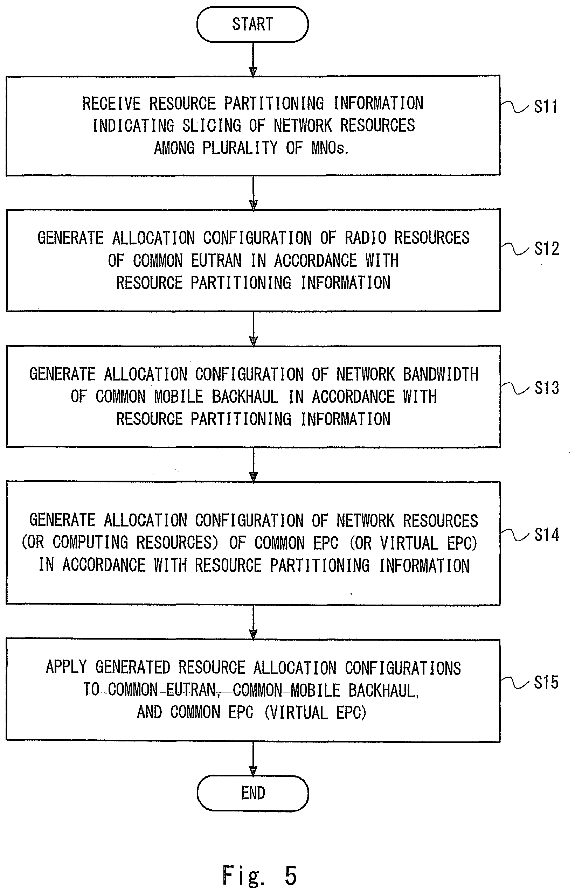

Fig. 5 is a flowchart showing one example of a network control method according to this embodiment. In Step S11, the network control system 500 (SDN controller 501) receives resource partitioning information indicating the slicing of network resources among a plurality of MNOs. The resource partitioning information indicates the common resource partitioning of the whole of the mobile communication network including the EUTRAN 100, the mobile backhaul 200, and the EPC 300.

In Step S12, the network control system 500 (SDN controller 501) generates an allocation configuration of radio resources of the EUTRAN 100 in accordance with the resource partitioning information. In Step S13, the network control system 500 (SDN controller 501) generates an allocation configuration of a network bandwidth of the mobile backhaul 200 in accordance with the resource partitioning information. In Step S14, the network control system 500 (SDN controller 501) generates an allocation configuration of network resources of the EPC 300 (computing resources in the case of the virtual EPC) in accordance with the resource partitioning information. Note that, the order of performing Steps S12 to S14 shown in Fig. 5 is merely an example. The order of performing Steps S12 to S14 may be an arbitrary order which is different from the order shown in Fig. 5, and Steps S12 to S14 may be performed in parallel.

In Step S15, the network control system 500 (SON/EMS 502, BRM 503, and SON/EMS 504) applies the generated resource allocation configurations to the EUTRAN 100, the mobile backhaul 200, and the EPC 300.

As can be seen from the above description, the network control system 500 according to this embodiment operates to enforce a resource allocation configuration to each of the EUTRAN 100, the mobile backhaul 200, and the EPC 300 in accordance with the resource partitioning information indicating the common resource partitioning of the whole of the mobile communication network including the EUTRAN 100, the mobile backhaul 200, and the EPC 300. Thus, according to this embodiment, it is possible to reduce the burden on an operator to perform the resource allocation configuration operation individually for each of the EUTRAN 100, the mobile backhaul 200, and the EPC 300. Further, according to this embodiment, it is possible to reduce configuration errors or inappropriate configurations compared with the case where an operator performs the configuration on each of the EUTRAN 100, the mobile backhaul 200, and the EPC 300. This is because the operator only needs to specify the common resource partitioning of the whole of the mobile communication network including the EUTRAN 100, the mobile backhaul 200, and the EPC 300.

### Second embodiment

An alternative example of the above-described first embodiment is described in this embodiment. A configuration example of a network control system according to this embodiment is the same as that shown in Fig. 4. In this embodiment, the resource partitioning information contains first and second resource partitioning information different from each other. The network control system 500 according to this embodiment determines which of the first and second resource partitioning information is used based on a communication status of any one of the common EUTRAN 100, the common mobile backhaul 200, and the common (or virtual) EPC 300. In other words, the network control system 500 switches the resource partitioning information to be applied to the mobile communication network based on the communication status of the mobile communication network. For example, the first resource partitioning information may be used when the communication status of the mobile communication network is good, and the second resource partitioning information may be used when the communication status of the mobile communication network is degraded. The network control system 500 operates to enforce the network resource configuration to each of the common EUTRAN 100, the common mobile backhaul 200, and the common (or virtual) EPC 300 in accordance with the selected resource partitioning information.

That is, in this embodiment, it is possible to dynamically change the slicing of network resources to a plurality of MNOs based on the communication status of the mobile communication network. In one example, the MNOs may not stand on an equal level, and there may be a prioritized MNO and another MNO. In this case, a certain proportion of resources may be allocated to the prioritized MNO regardless of the communication status of the mobile communication network. On the other hand, when the communication status of the mobile communication network is degraded, a smaller proportion of resources than when the communication status is good may be allocated to the other MNO.

Consider the case where a point-to-point radio link using microwaves or millimeter waves (e.g., the point-to-point radio link 25 in Figs. 1 to 3) is used in the mobile backhaul 200. The communication quality of the point-to-point radio link depends on meteorological conditions (e.g., rain, fog, haze). Rain, fog, haze and the like degrades line-of-sight visibility between two communication devices and attenuates radio signals (e.g., microwaves or millimeter waves). Therefore, a point-to-point wireless system performs adaptive processing including adjusting a modulation scheme, a code rate and the like based on the communication quality (e.g., Received Signal Strength Indicator (RSSI), Signal to Noise Ratio (SNR), or Bit Error Rate (BER)) of the point-to-point radio link. The adaptive processing that adjusts a modulation scheme, a code rate and the like based on communication quality of a radio link is called Adaptive Modulation and Coding (AMC) or link adaptation. By changing the modulation scheme, the code rate and the like, the bit rate (throughput) of the point-to-point radio link changes.

That is, in the case where the point-to-point radio link is used in the mobile backhaul 200, the bit rate (throughput) of the mobile backhaul 200 tends to vary frequently. Thus, it is preferred to dynamically change the slicing of network resources to a plurality of MNOs based on the communication status (e.g., communication quality, throughput, a modulation scheme and a code rate) of the point-to-point radio link used in the mobile backhaul 200.

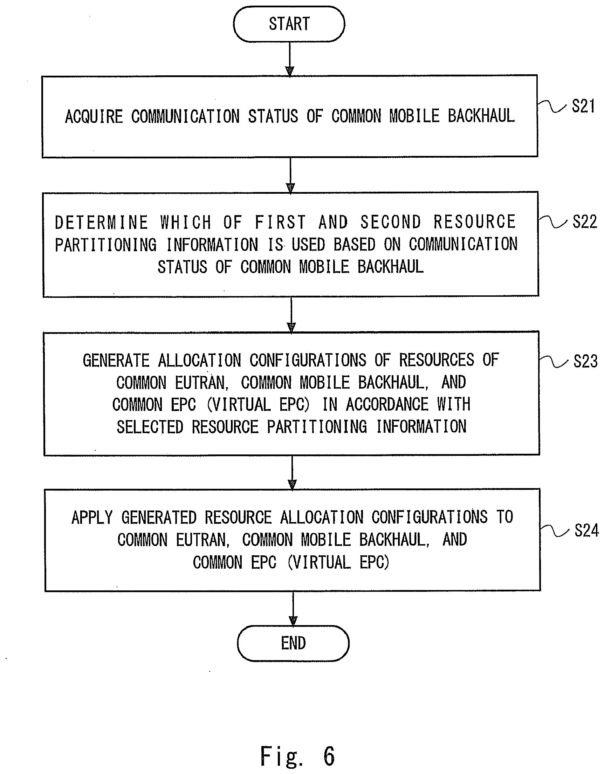

Fig. 6 is a flowchart showing one example of the network control method according to this embodiment. Fig. 6 shows an example where the slicing of network resources to a plurality of MNOs is dynamically changed based on a communication status of the common mobile backhaul 200. In Step S21, the network control system 500 (SDN controller 501) acquires the communication status of the mobile backhaul 200. The SDN controller 501 may communicate with the BRM 503 and receive a message indicating the communication status of the mobile backhaul 200 from the BRM 503.

In Step S22, the network control system 500 (SDN controller 501) determines which of the first resource partitioning information and the second resource partitioning information is used based on the communication status of the mobile backhaul 200. In Step S23, the network control system 500 (SDN controller 501) generates the resource allocation configuration for each of the common EUTRAN 100, the common mobile backhaul 200, and the common (or virtual) EPC 300 in accordance with the selected resource partitioning information. In Step S24, the network control system 500 (SON/EMS 502, BRM 503 and SON/EMS 504) applies the generated resource allocation configurations to the EUTRAN 100, the mobile backhaul 200, and the EPC 300.

### Third embodiment

An alternative example of the above-described first and second embodiments is described in this embodiment. A configuration example of a network control system according to this embodiment is the same as that shown in Fig. 4. In this embodiment, one or both of the SON/EMS 502 coupled to the common EUTRAN 100 and the SON/EMS 504 coupled to the common (virtual) EPC 300 are configured to communicate with the BRM 503 coupled to the mobile backhaul 200. Further, one or both of the SON/EMS 502 and the SON/EMS 504 are configured to receive a message indicating a communication status of the mobile backhaul 200 from the BRM 503 and change the resource allocation configuration to a plurality of MNOs to be applied to the RAN 100 or the EPC 300 based on the communication status of the mobile backhaul 200.

For example, one or both of the SON/EMS 502 and the SON/EMS 504 may receive, from the SDN controller 501 in advance, a first resource allocation configuration that is applied when the communication status of the mobile backhaul 200 is good and a second resource allocation configuration that is applied when the communication status of the mobile backhaul 200 is degraded. Then, one or both of the SON/EMS 502 and the SON/EMS 504 may switch between the first resource allocation configuration and the second resource allocation configuration based on the communication status of the mobile backhaul 200 notified from the BRM 503.

According to this embodiment, it is possible to change the resource allocation to a plurality of MNOs in the EUTRAN 100 (or EPC 300) based on the direct communication between the SON/EMS 502 (or SON/EMS 504) and the BRM 503 without through the SDN controller 501. It is thus possible to reduce a delay time required for the process of dynamically changing the resource allocation configuration in the EUTRAN 100 (or EPC 300) based on the communication status of the mobile backhaul 200 compared with the case of communicating through the SDN controller 501.

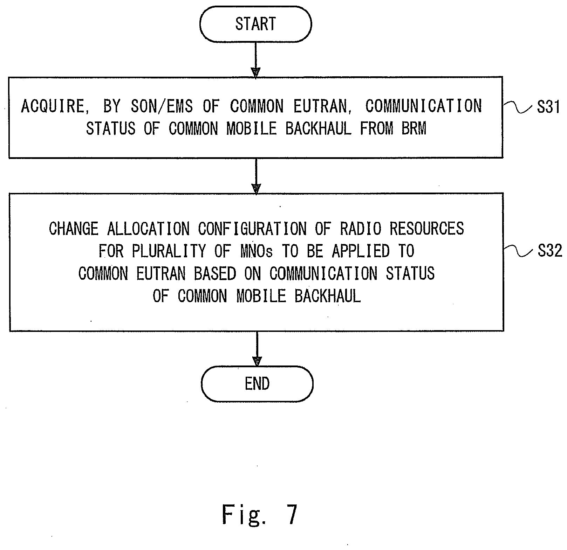

Fig. 7 is a flowchart showing one example of the network control method according to this embodiment. Fig. 7 shows an example where the resource allocation configuration to a plurality of MNOs in the common EUTRAN 100 is dynamically changed based on the communication status of the common mobile backhaul 200. In Step S31, the SON/EMS 502 of the EUTRAN 100 receives a message indicating the communication status of the mobile backhaul 200 from the BRM 503. In Step S32, the SON/EMS 502 changes the allocation configuration of radio resources to a plurality of MNOs to be applied to the EUTRAN 100 based on the communication status of the mobile backhaul 200 notified from the BRM 503.

### Other embodiments

The case where all of the RAN, the mobile backhaul, and the core network are shared by a plurality of MNOs is mainly described in the first to third embodiments. However, the first to third embodiments may be applied also to the case where only the RAN and the mobile backhaul are shared by a plurality of MNOs as shown in Fig. 1. Stated differently, the first to third embodiments may be applied to the case where at least two of the RAN, the mobile backhaul, and the core network are shared by a plurality of MNOs.

The operation described in the third embodiment may be performed independently of the resource allocation control on the basis of the resource partitioning information described in the first and second embodiments. Stated differently, the operation described in the third embodiment is also effective in a mobile communication network and a control system that do not perform the resource allocation control on the basis of the resource partitioning information described in the first and second embodiments.

The methods performed in the network control system 500, the SDN controller 501, the SON/EMS 502, the BRM 503 and the SON/EMS 504 described in the plurality of embodiments above may be implemented by causing a computer system including at least one processor (e.g., microprocessor, Micro Processing Unit (MPU), Digital Signal Processor (DSP)) to execute a program. To be specific, one or more programs including instructions for causing a computer system to perform algorithms described using the flowcharts and the like may be created, and the program(s) may be supplied to the computer.

This program(s) can be stored and provided to a computer using any type of non-transitory computer readable medium. The non-transitory computer readable medium includes any type of tangible storage medium. Examples of the non-transitory computer readable medium include magnetic storage media (such as flexible disks, magnetic tapes, hard disk drives, etc.), optical magnetic storage media (e.g., magneto-optical disks), CD-ROM (Read Only Memory), CD-R, CD-R/W, and semiconductor memories (such as mask ROM, Programmable ROM (PROM), Erasable PROM (EPROM), flash ROM, Random Access Memory (RAM), etc.). The program(s) may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

The above embodiments are described mainly with respect to EPS. However, as mentioned earlier, those embodiments may be applied to a mobile communication network or system different from EPS, such as UMTS, GSM/GPRS system, 3GPP2 CDMA2000 system, LTE-Advanced system and the like.

Further, the above-described embodiments are merely an exemplification of application of the technical idea obtained by the inventors of this application. Therefore, the technical idea is not limited only to the above-described embodiments, and various changes and modifications may be made as a matter of course.

### Reference Signs List

10, 100 COMMON EVOLVED UTRAN (EUTRAN)
11 eNodeB
12 USER EQUIPMENT (UE)
20, 200 COMMON MOBILE BACKHAUL
21, 22 PACKET COMMUNICATION DEVICE
23, 24 PACKET COMMUNICATION DEVICE
25 POINT-TO-POINT RADIO LINK
30A, 30B, 32A, 32B EVOLVED PACKET CORE (EPC)
31 COMMON EPC
33 VIRTUALIZED CORE NETWORK
34A, 34B VIRTUAL EPC
300 COMMON EPC OR VIRTUAL EPC
500 NETWORK CONTROL SYSTEM
501 SOFTWARE-DEFINED NETWORK (SDN) CONTROLLE
502, 504 SELF-ORGANIZING NETWORK(SON)/ELEMENT MANAGEMENT SYSTEM(EMS)
503 BACKHAUL RESOURCE MANAGER (BRM)
600 OPERATIONS SUPPORT SYSTEM (OSS)

## Claims

1. A network control system (500) comprising:
a control module (501) configured to enforce a network resource configuration to each of at least two of a radio access network (100), a mobile backhaul network (200), and a core network (300) in accordance with common resource partitioning information indicating slicing of network resources among a plurality of mobile network operators (40A, 40B), in order to allow the plurality of mobile network operators (40A, 40B) to share the at least two networks (100, 200, 300), wherein
the network control system (500) is **characterized in that** the control module (501) is configured to generate, in accordance with the common resource partitioning information, a third configuration causing at least one hardware element in the core network (300) to function as a virtualized core network node of each of the plurality of mobile network operators (40A, 40B), and apply the third configuration to the at least one hardware element.

2. The network control system (500) according to Claim 1, wherein the control module (501) is configured to generate a first configuration regarding allocation of radio resources of the radio access network (100) in accordance with the common resource partitioning information, and apply the first configuration to a first network element in the radio access network (100).

3. The network control system (500) according to Claim 2, wherein the first configuration affects scheduling of at least one of downlink transmission and uplink transmission in the first network element.

4. The network control system (500) according to any one of Claims 1 to 3, wherein the control module (501) is configured to generate a second configuration regarding allocation of a network bandwidth of the mobile backhaul network (200) in accordance with the common resource partitioning information, and apply the second configuration to a second network element in the mobile backhaul network (200).

5. The network control system (500) according to Claim 4, wherein the second configuration affects at least one of a Virtual Private Network, VPN, configuration, a Virtual Local Area Network, VLAN, configuration, a Multi-protocol Label Switching, MPLS, configuration, a traffic shaping configuration, and a traffic scheduling configuration in the second network element.

6. The network control system (500) according to any one of Claims 1 to 5, wherein the third configuration indicates allocation of computing resources of the at least one hardware element.

7. The network control system (500) according to any one of Claims 1 to 5, wherein the control module (501) is configured to generate a fourth configuration regarding allocation of network resources of the core network (300) in accordance with the common resource partitioning information, and apply the fourth configuration to a third network element in the core network (300).

8. The network control system (500) according to Claim 7, wherein the fourth configuration affects at least one of a traffic shaping configuration and a traffic scheduling configuration in the third network element.

9. The network control system (500) according to any one of Claims 1 to 8, wherein the control module (501) is configured to receive the common resource partitioning information from an Operations Support System, OSS.

10. The network control system (500) according to any one of Claims 1 to 9, wherein the control module (501) includes:
a mediation module (501) configured to convert the common resource partitioning information into configuration information of network resources to be applied to each of the at least two networks (100, 200, 300); and
an enforcement module (502, 503, 504) configured to apply the configuration information to each of the at least two networks (100, 200, 300).

11. The network control system (500) according to any one of Claims 1 to 10, wherein the common resource partitioning information indicates an amount or a proportion of network resources to be partitioned to each of the plurality of mobile network operators (40A, 40B).

12. The network control system (500) according to Claim 11, wherein the common resource partitioning information indicates an amount or a proportion of network resources to be fixedly partitioned to each of the plurality of mobile network operators (40A, 40B) and an amount or a proportion of network resources to be shared among the plurality of mobile network operators (40A, 40B).

13. The network control system (500) according to any one of Claims 1 to 12, wherein
the common resource partitioning information contains first resource partitioning information and second resource partitioning information different from the first resource partitioning information in slicing of network resources,
the at least two networks (100, 200, 300) includes the mobile backhaul network (200),
the control module (501) is configured to receive a message indicating a communication status of the mobile backhaul network (200) from a Backhaul Resource Manager (503) of the mobile backhaul network (200), and
the control module (501) is configured to select one of the first and second resource partitioning information to be used based on the communication status of the mobile backhaul network (200), and enforce a network resource configuration to each of the at least two networks (100, 200, 300) in accordance with the selected resource partitioning information.

14. The network control system (500) according to Claim 13, wherein
the mobile backhaul network (200) includes a point-to-point radio link, and
the communication status relates to at least one of communication quality, throughput, a modulation scheme, and a code rate of the point-to-point radio link.

15. A control method comprising:
enforcing a network resource configuration to each of at least two of a radio access network (100), a mobile backhaul network (200), and a core network (300) in accordance with common resource partitioning information indicating slicing of network resources among a plurality of mobile network operators (40A, 40B), in order to allow the plurality of mobile network operators (40A, 40B) to share the at least two networks (100, 200, 300), wherein
the control method is **characterized in that** the enforcing includes generating, in accordance with the common resource partitioning information, a third configuration causing at least one hardware element in the core network (300) to function as a virtualized core network node of each of the plurality of mobile network operators (40A, 40B), and applying the third configuration to the at least one hardware element.

16. A non-transitory computer readable medium storing a program for causing a computer to perform the control method according to Claim 15.

## Patentansprüche

1. Netzwerksteuersystem (500) mit:
einem Steuermodul (501), das dafür konfiguriert ist, eine Netzwerkressourcenkonfiguration für jedes von mindestens zwei Netzwerken unter einem Funkzugangsnetzwerk (100), einem Mobil-Backhaul-Netzwerk (200) und einem Kernnetzwerk (300) gemäß Information zum Aufteilen gemeinsamer Ressourcen zu erzwingen, die eine Aufteilung von Netzwerkressourcen unter mehreren Mobilnetzwerkbetreibern (40A, 40B) anzeigt, um es den mehreren Mobilnetzwerkbetreibern (40A, 40B) zu ermöglichen, die mindestens zwei Netzwerke (100, 200, 300) gemeinsam zu nutzen,
wobei das Netzwerksteuersystem (500) **dadurch gekennzeichnet ist, dass** das Steuermodul (501) dafür konfiguriert ist, gemäß der Information zum Aufteilen gemeinsamer Ressourcen eine dritte Konfiguration zu erzeugen, die mindestens ein Hardwareelement im Kernnetzwerk (300) veranlasst, als ein virtualisierter Kernnetzwerkknoten jedes der mehreren Mobilnetzwerkbetreiber (40A, 40B) zu funktionieren und die dritte Konfiguration auf das mindestens eine Hardwareelement anzuwenden.

2. Netzwerksteuersystem (500) nach Anspruch 1, wobei das Steuermodul (501) dafür konfiguriert ist, eine erste Konfiguration bezüglich der Zuteilung von Funkressourcen des Funkzugangsnetzwerks (100) gemäß der Information über die Aufteilung gemeinsamer Ressourcen zu erzeugen und die erste Konfiguration auf ein erstes Netzwerkelement im Funkzugangsnetzwerk (100) anzuwenden.

3. Netzwerksteuersystem (500) nach Anspruch 2, wobei die erste Konfiguration das Scheduling einer Downlink-Übertragung und/oder einer Uplink-Übertragung im ersten Netzwerkelement beeinflusst.

4. Netzwerksteuersystem (500) nach einem der Ansprüche 1 bis 3, wobei das Steuermodul (501) dafür konfiguriert ist, eine zweite Konfiguration bezüglich der Zuweisung einer Netzwerkbandbreite des Mobil-Backhaul-Netzwerks (200) gemäß der Information über die Aufteilung gemeinsamer Ressourcen zu erzeugen und die zweite Konfiguration auf ein zweites Netzwerkelement im Mobil-Backhaul-Netzwerk (200) anzuwenden.

5. Netzwerksteuersystem (500) nach Anspruch 4, wobei die zweite Konfiguration mindestens eine Konfiguration unter einer VPN-, Virtual Private Network, Konfiguration, einer VLAN-, Virtual Local Area Network, Konfiguration, einer MPLS-, Multi-Protocol Label Switching, Konfiguration, einer Traffic-Shaping-Konfiguration und einer Traffic-Scheduling-Konfiguration im zweiten Netzwerkelement beeinflusst.

6. Netzwerksteuerungssystem (500) nach einem der Ansprüche 1 bis 5, wobei die dritte Konfiguration die Zuteilung von Rechenressourcen des mindestens einen Hardwareelements anzeigt.

7. Netzwerksteuersystem (500) nach einem der Ansprüche 1 bis 5, wobei das Steuermodul (501) dafür konfiguriert ist, eine vierte Konfiguration bezüglich der Zuteilung von Netzwerkressourcen des Kernnetzwerks (300) gemäß der Information über die Aufteilung gemeinsamer Ressourcen zu erzeugen und die vierte Konfiguration auf ein drittes Netzwerkelement im Kernnetzwerk (300) anzuwenden.

8. Netzwerksteuersystem (500) nach Anspruch 7, wobei die vierte Konfiguration eine Traffic-Shaping-Konfiguration und/oder eine Traffic-Scheduling-Konfiguration im dritten Netzwerkelement beeinflusst.

9. Netzwerksteuersystem (500) nach einem der Ansprüche 1 bis 8, wobei das Steuermodul (501) dafür konfiguriert ist, die Information über die Aufteilung gemeinsamer Ressourcen von einem Operations Support System, OSS, zu empfangen.

10. Netzwerksteuersystem (500) nach einem der Ansprüche 1 bis 9, wobei das Steuermodul (501) aufweist:
ein Vermittlungsmodul (501), das dafür konfiguriert ist, die Information über die Aufteilung gemeinsamer Ressourcen in Konfigurationsinformation von Netzwerkressourcen umzuwandeln, die auf jedes der mindestens zwei Netzwerke (100, 200, 300) angewendet werden soll; und
ein Enforcement-Modul (502, 503, 504), das dafür konfiguriert ist, die Konfigurationsinformation auf jedes der mindestens zwei Netzwerke (100, 200, 300) anzuwenden.

11. Netzwerksteuersystem (500) nach einem der Ansprüche 1 bis 10, wobei die Information über die Aufteilung gemeinsamer Ressourcen eine Menge oder einen Anteil von Netzwerkressourcen anzeigt, die/der jedem der mehreren Mobilnetzwerkbetreiber (40A, 40B) zugeteilt werden soll.

12. Netzwerksteuersystem (500) nach Anspruch 11, wobei die Information über die Aufteilung gemeinsamer Ressourcen eine Menge oder einen Anteil von Netzwerkressourcen anzeigt, die/der jedem der mehreren Mobilnetzwerkbetreiber (40A, 40B) fest zugeteilt werden soll, und eine Menge oder einen Anteil von Netzwerkressourcen, die/der von den mehreren Mobilnetzwerkbetreibern (40A, 40B) gemeinsam genutzt werden soll.

13. Netzwerksteuersystem (500) nach einem der Ansprüche 1 bis 12, wobei
die Information über die Aufteilung gemeinsamer Ressourcen erste Ressourcenaufteilungsinformation und von der ersten Ressourcenaufteilungsinformation verschiedene zweite Ressourcenaufteilungsinformation zum Aufteilen von Netzwerkressourcen enthält,
wobei die mindestens zwei Netzwerke (100, 200, 300) das Mobil-Backhaul-Netzwerk (200) aufweisen,
das Steuermodul (501) dafür konfiguriert ist, eine Nachricht, die einen Kommunikationsstatus des Mobil-Backhaul-Netzwerks (200) anzeigt, von einem Backhaul-Ressourcenmanager (503) des Mobil-Backhaul-Netzwerks (200) zu empfangen, und
das Steuermodul (501) dafür konfiguriert ist, basierend auf dem Kommunikationsstatus des Mobil-Backhaul-Netzwerks (200) die erste oder die zweite zu verwendende Ressourcenaufteilungsinformation auszuwählen und eine Netzwerkressourcenkonfiguration für jedes der mindestens zwei Netzwerke (100, 200, 300) gemäß der ausgewählten Ressourcenaufteilungsinformation zu erzwingen.

14. Netzwerksteuersystem (500) nach Anspruch 13, wobei
das Mobil-Backhaul-Netzwerk (200) eine Punkt-zu-Punkt-Funkverbindung aufweist, und
der Kommunikationsstatus mit mindestens einem Parameter unter einer Kommunikationsqualität, einem Durchsatz, einem Modulationsschema und einer Coderate der Punkt-zu-Punkt-Funkverbindung in Beziehung steht.

15. Steuerverfahren mit den Schritten:
Erzwingen einer Netzwerkressourcenkonfiguration für jedes von mindestens zwei Netzwerken unter einem Funkzugangsnetzwerk (100), einem Mobil-Backhaul-Netzwerk (200) und einem Kernnetzwerk (300) gemäß Information über die Aufteilung gemeinsamer Ressourcen, die eine Aufteilung von Netzwerkressourcen unter mehreren Mobilnetzwerkbetreibern (40A, 40B) anzeigt, um es den mehreren Mobilnetzwerkbetreibern (40A, 40B) zu ermöglichen, die mindestens zwei Netzwerke (100, 200, 300) gemeinsam zu nutzen, wobei
das Steuerverfahren **dadurch gekennzeichnet ist, dass**
der Erzwingungsschritt aufweist: Erzeugen einer dritten Konfiguration gemäß der Information über die Aufteilung gemeinsamer Ressourcen, wobei die dritte Konfiguration mindestens ein Hardwareelement im Kernnetzwerk (300) veranlasst, als ein virtualisierter Kernnetzwerkknoten jedes der mehreren Mobilnetzwerkbetreiber (40A, 40B) zu funktionieren, und Anwenden der dritten Konfiguration auf das mindestens eine Hardwareelement.

16. Nichtflüchtiges computerlesbares Medium, das ein Programm speichert, das einen Computer veranlasst, das Steuerverfahren nach Anspruch 15 auszuführen.

## Revendications

1. Système de commande de réseau (500) comprenant :
un module de commande (501) configuré pour mettre en application une configuration de ressources de réseau pour chacun d'au moins deux parmi un réseau d'accès radio (100), un réseau de mobile backhaul (200), et un réseau coeur (300) conformément à des informations de partitionnement de ressources communes indiquant le découpage de ressources de réseau entre une pluralité d'opérateurs de réseau mobile (40A, 40B), afin de permettre à la pluralité d'opérateurs de réseau mobile (40A, 40B) de partager les au moins deux réseaux (100, 200, 300), dans lequel
le système de commande de réseau (500) est **caractérisé en ce que** le module de commande (501) est configuré pour générer, conformément aux informations de partitionnement de ressources communes, une troisième configuration amenant au moins un élément matériel dans le réseau coeur (300) à fonctionner comme un noeud de réseau coeur virtualisé de chacun de la pluralité d'opérateurs de réseau mobile (40A, 40B), et appliquer la troisième configuration à l'au moins un élément matériel.

2. Système de commande de réseau (500) selon la revendication 1, dans lequel le module de commande (501) est configuré pour générer une première configuration concernant l'allocation de ressources radio du réseau d'accès radio (100) conformément aux informations de partitionnement de ressources communes, et appliquer la première configuration à un premier élément de réseau dans le réseau d'accès radio (100).

3. Système de commande de réseau (500) selon la revendication 2, dans lequel la première configuration touche la planification d'au moins l'une parmi une transmission de liaison descendante et une transmission de liaison montante dans le premier élément de réseau.

4. Système de commande de réseau (500) selon l'une quelconque des revendications 1 à 3, dans lequel le module de commande (501) est configuré pour générer une deuxième configuration concernant l'allocation d'une largeur de bande de réseau du réseau de mobile backhaul (200) conformément aux informations de partitionnement de ressources communes, et appliquer la deuxième configuration à un deuxième élément de réseau dans le réseau de mobile backhaul (200).

5. Système de commande de réseau (500) selon la revendication 4, dans lequel la deuxième configuration touche au moins l'une parmi une configuration de Réseau Privé Virtuel, VPN, une configuration de Réseau Local Virtuel, VLAN, une configuration de Commutation d'Etiquettes Multi-protocole, MPLS, une configuration de mise en forme de trafic, et une configuration de planification de trafic dans le deuxième élément de réseau.

6. Système de commande de réseau (500) selon l'une quelconque des revendications 1 à 5, dans lequel la troisième configuration indique l'allocation de ressources informatiques de l'au moins un élément matériel.

7. Système de commande de réseau (500) selon l'une quelconque des revendications 1 à 5, dans lequel le module de commande (501) est configuré pour générer une quatrième configuration concernant l'allocation de ressources de réseau du réseau coeur (300) conformément aux informations de partitionnement de ressources communes, et appliquer la quatrième configuration à un troisième élément de réseau dans le réseau coeur (300).

8. Système de commande de réseau (500) selon la revendication 7, dans lequel la quatrième configuration touche au moins l'une parmi une configuration de mise en forme de trafic et une configuration de planification de trafic dans le troisième élément de réseau.

9. Système de commande de réseau (500) selon l'une quelconque des revendications 1 à 8, dans lequel le module de commande (501) est configuré pour recevoir les informations de partitionnement de ressources communes en provenance d'un Système de Support d'Opérations, OSS.

10. Système de commande de réseau (500) selon l'une quelconque des revendications 1 à 9, dans lequel le module de commande (501) inclut :
un module de médiation (501) configuré pour convertir les informations de partitionnement de ressources communes en informations de configuration de ressources de réseau à appliquer à chacun des au moins deux réseaux (100, 200, 300) ; et
un module de mise en application (502, 503, 504) configuré pour appliquer les informations de configuration à chacun des au moins deux réseaux (100, 200, 300).

11. Système de commande de réseau (500) selon l'une quelconque des revendications 1 à 10, dans lequel les informations de partitionnement de ressources communes indiquent une quantité ou une proportion de ressources de réseau à partitionner vers chacun de la pluralité d'opérateurs de réseau mobile (40A, 40B).

12. Système de commande de réseau (500) selon la revendication 11, dans lequel les informations de partitionnement de ressources communes indiquent une quantité ou une proportion de ressources de réseau à partitionner de manière fixe vers chacun de la pluralité d'opérateurs de réseau mobile (40A, 40B) et une quantité ou une proportion de ressources de réseau à partager entre la pluralité d'opérateurs de réseau mobile (40A, 40B).

13. Système de commande de réseau (500) selon l'une quelconque des revendications 1 à 12, dans lequel
les informations de partitionnement de ressources communes contiennent des premières informations de partitionnement de ressources et des secondes informations de partitionnement de ressources différentes des premières informations de partitionnement de ressources en termes de découpage de ressources de réseau,
les au moins deux réseaux (100, 200, 300) incluent le réseau de mobile backhaul (200),
le module de commande (501) est configuré pour recevoir un message indiquant un statut de communication du réseau de mobile backhaul (200), en provenance d'un Gestionnaire de Ressource de Backhaul (503) du réseau de mobile backhaul (200), et
le module de commande (501) est configuré pour sélectionner l'une parmi les premières et secondes informations de partitionnement de ressources à utiliser sur la base du statut de communication du réseau de mobile backhaul (200), et mettre en application une configuration de ressources de réseau pour chacun des au moins deux réseaux (100, 200, 300) conformément aux informations de partitionnement de ressources sélectionnées.

14. Système de commande de réseau (500) selon la revendication 13, dans lequel
le réseau de mobile backhaul (200) inclut une liaison radio point à point, et
le statut de communication concerne au moins l'un parmi une qualité de communication, un débit, un schéma de modulation, et un taux de codage de la liaison radio point à point.

15. Procédé de commande comprenant :
la mise en application d'une configuration de ressources de réseau pour chacun d'au moins deux parmi un réseau d'accès radio (100), un réseau de mobile backhaul (200), et un réseau coeur (300) conformément à des informations de partitionnement de ressources communes indiquant le découpage de ressources de réseau entre une pluralité d'opérateurs de réseau mobile (40A, 40B), afin de permettre à la pluralité d'opérateurs de réseau mobile (40A, 40B) de partager les au moins deux réseaux (100, 200, 300), dans lequel
le procédé de commande est **caractérisé en ce que** la mise en application inclut la génération, conformément aux informations de partitionnement de ressources communes, d'une troisième configuration amenant au moins un élément matériel dans le réseau coeur (300) à fonctionner comme un noeud de réseau coeur virtualisé de chacun de la pluralité d'opérateurs de réseau mobile (40A, 40B), et l'application de la troisième configuration à l'au moins un élément matériel.

16. Support non transitoire lisible par ordinateur stockant un programme pour amener un ordinateur à effectuer le procédé de commande selon la revendication 15.
